# EUROPEAN PATENT APPLICATION

(11) **EP 4 421 127 A1**
(43) Date of publication of application: **28.08.2024**
(21) Application number: 23158407.9
(22) Date of filing: 24.02.2023
(51) Int. Cl.: C08L 83/04

(54) **TEMPERATURE RESISTANT MOISTURE CURABLE SILICONE COMPOSITIONS**

(71) Applicant: Henkel AG & Co. KGaA, 40589 Düsseldorf (DE)
(72) Inventor: Schaefer, Sascha, 40822 Mettmann (DE); Helpenstein, Klaus, 41199 Mönchengladbach (DE)

(57) **Abstract**

The invention relates to a curable composition comprising
I. organyloxy group containing organopolysiloxanes comprising
(A) organopolysiloxane(s) containing organyloxy groups and consisting of units of the formula (I)

R*ₐ*R¹*_{b}*(OR²)*_{c}*SiO_{(4-*a-b-c*)/2} (I), and/or their partial hydrolysates,

(B) organosilicon compound(s) of the formula (II)

(R⁴O)*_{d}*SiR³_{(4-*d*)}

(C) organosilicon compound(s) containing basic nitrogen, of the formula (III)

(R⁶O)*ₑ*SiR⁵_{(4-*e*)} (III),

and/or their partial hydrolysates, and

optionally (D) organosilicon compound(s) of the formula (IV)

(R⁸O)*ₕ*SiR⁷_{(4-*h*)} (IV),

and/or their partial hydrolysates,
where R, R¹, R², a, b, c, R³, R⁴, d, R⁵, R⁶, e, R⁷, R⁸ and h are defined as stated in the specification,

II. a first pigment,
III. optionally a second pigment,
IV. optionally surface treated silica,
V. optionally surface treated calcium carbonate,
VI. optionally a Cerium (III) additive,
VII. optionally a tin catalyst.

The invention also relates to adhesive, sealant, and/or coating materials comprising said composition and the use of said composition.

## Description

The invention relates to moisture curable compositions based on organyloxy group containing polyorganosiloxanes. These compositions have improved adhesion properties and high temperature resistant properties and do not release oximes during the curing process. In addition, these compositions are preferably thixotropic and non-sagging. The invention also relates to adhesive, sealant, and/or coating materials comprising said composition and the use of said composition.

Polymer systems which possess reactive crosslinkable silyl groups, for example alkoxy-silyl groups, have long been known. In the presence of atmospheric moisture these alkoxysilane polymers are able to condense with elimination of the alkoxy groups. Depending on the amount of alkoxysilane groups and their structure, mainly long-chain polymers (thermoplastics), relatively wide-meshed three-dimensional networks (elastomers) or highly crosslinked systems (thermosets) form.

Silicone polymers (polyorganosiloxanes), particularly polydialkylsiloxanes such as polydimethylsiloxane (PDMS), have great importance in the production of adhesive, sealing, coating, and insulation materials. Among these, those that vulcanize at low temperatures and under ambient conditions constitute a significant share of the market. Typical formulations contain a reactive polyorganosiloxane, in particular a polyorganosiloxane having at least one, preferably two hydroxy groups bound to a silicon atom. It is typically used in combination with a silane-based crosslinker which has hydrolysable groups such as alkoxy groups bound to the silicon atom as described in, for example EP 0 564 253 A1.

The uses and possible applications of such polyorganosiloxane systems are equally diverse. They can, for example be used for the production of elastomers, sealants, adhesives, elastic adhesive systems, rigid and flexible foams, a wide variety of coating systems and in the medical field, for example, for impression materials in dentistry. These products can be applied in any form, such as painting, spraying, casting, pressing, filling and the like.

Numerous crosslinkers that act as functionalizing moieties for the respective polymer backbone are known in the art. Besides their functionality used for coupling to the polymer backbone, these can be differentiated into acidic, basic, and neutral crosslinkers based on the type of leaving groups released during hydrolysis. Typical acidic crosslinkers contain acid groups as hydrolysable groups and release the corresponding acids, e.g., acetic acid, during the crosslinking. Typical basic crosslinkers release amines during the crosslinking. Typical representatives of neutral crosslinkers have hydrolysable groups, which release alcohols or oximes during the crosslinking, such as methanol or ethanol.

However, high temperature sealing products based on moisture curable organopolysiloxanes usually require oxime releasing crosslinking compounds in order to achieve a full cure and stability of the cured product at elevated temperatures and against aggressive media. The combination of organoyloxy group containing organopolysiloxanes with a suitable filler and stabilizer package allows for high temperature stability of the cured sealant while avoiding the release of oximes to the environment during the curing process. The advantage of this technology is that the oxime represents an excellent leaving group so that a very robust polymeric siloxane network is formed which can withstand high temperatures, pressure and aggressive media. The disadvantage is that oximes are in discussion to be harmful substances which should be avoided to protect workers and the environment.

Potential applications of such high temperature sealing products based on moisture curable organopolysiloxanes include many household and industrial devices, which are operated at high pressure, high temperatures and in contact with an aggressive environment, such as heat exchangers. For the assembly of such a heat exchanger a robust sealing material is needed that can tolerate temperatures of boiling water, acidic aqueous fluids and elevated pressure in order to ensure a fully sealed device during the expected lifetime.

Hence, a suitable alternative to said high temperature sealing products based on moisture curable organopolysiloxanes using oxime releasing crosslinking compounds is needed. Thus, the present invention aims at a high temperature sealing product based on moisture curable organopolysiloxanes with lower health concerns. In addition, improvement in adhesion on several relevant surfaces, increased elasticity (elongation) and an increased curing speed are also desired.

The present invention has achieved said objectives by providing a curable composition in accordance with claim 1. Preferred embodiments of said curable composition are described in the depending claims. In addition, particularly suitable applications of said curable composition are protected by a further independent product claim and a further independent use claim.

The present invention describes a moisture curable formulation based on organyloxy group containing organopolysiloxanes in combination with at least one pigment, preferably in combination with a surface modified calcium carbonate with similar or better heat stability like oxime releasing moisture curing organopolysiloxanes and the use as sealing material especially for household and industrial devices. The present invention does not rely on oxime releasing curing mechanism and therefore the above-discussed disadvantages and harms of the oxime technology have been avoided. In addition, improvement in adhesion on several relevant surfaces, increased elasticity (elongation) and an increased curing speed have also observed.

The curable composition of the present invention comprises organyloxy group containing organopolysiloxanes (I) comprising
(A) organopolysiloxanes containing organyloxy groups and composed of units of the formula (I)

   R*ₐ*R¹*_{b}*(OR²)*_{c}*SiO_{(4-*a*-*b*-*c*)/2} (I),

   where
   R may be identical or different and represents monovalent, SiC-bonded, optionally substituted hydrocarbyl radicals that are free from aliphatic carbon-carbon multiple bonds,
   R¹ may be identical or different and denotes monovalent, SiC-bonded, optionally substituted hydrocarbyl radicals having aliphatic carbon-carbon multiple bonds,
   R² may be identical or different and denotes monovalent, optionally substituted hydrocarbyl radicals, which may be interrupted by oxygen atoms,
   a is 0, 1, 2 or 3,
   b is 0 or 1, and
   c is 0, 1, 2 or 3,
   with the proviso that in formula (I) the sum a+b+c≤3 and c is other than 0 in at least one unit,
(B) organosilicon compounds of the formula (II)

   (R⁴O)*_{d}*SiR³_{(4-*d*)} (II),

   where
   R³ may be identical or different and denotes monovalent, SiC-bonded, aliphatic hydrocarbyl radicals having 1 to 7 carbon atoms that are optionally substituted by ether groups, ester groups, (poly) glycol radicals or triorganyloxysilyl groups, or aromatic radicals,
   R⁴ may be identical or different and denotes hydrogen atom or monovalent, optionally substituted hydrocarbyl radicals, which may be interrupted by oxygen atoms,
   d is 2, 3 or 4, preferably 3 or 4, more preferably 3, and/or their partial hydrolysates,
(C) organosilicon compounds containing basic nitrogen and of the formula (III)

   (R⁶O)*ₑ*SiR⁵_{(4-*e*)} (III),

   where
   R⁵ may be identical or different and denotes monovalent, SiC-bonded radicals containing basic nitrogen,
   R⁶ may be identical or different and denotes hydrogen atom or monovalent, optionally substituted hydrocarbyl radicals, which may be interrupted by oxygen atoms,
   e is 2 or 3, preferably 3,
   and/or their partial hydrolysates
   and optionally
(D) organosilicon compounds of the formula (IV)

   (R⁸O)*ₕ*SiR⁷_{(4-*h*)} (IV),

   where
   R⁷ may be identical or different and denotes monovalent, SiC-bonded, aliphatic hydrocarbyl radicals optionally substituted by ether groups, ester groups, (poly)glycol radicals or triorganyloxysilyl groups and having at least 8 carbon atoms,
   R⁸ may be identical or different and denotes hydrogen atom or monovalent, optionally substituted hydrocarbyl radicals which may be interrupted by oxygen atoms,
   h is 2 or 3, preferably 3
   and/or their partial hydrolysates.

In the context of the present invention, the term *"organopolysiloxanes"* is intended to encompass polymeric, oligomeric, and dimeric siloxanes.

The crosslinkable compositions are preferably compositions which can be crosslinked by condensation reactions.

In the context of the present invention, the designation *"condensation reaction"* is intended also to encompass any preceding hydrolysis step.

Examples of radicals R are alkyl radicals such as the methyl, ethyl, n-propyl, isopropyl, 1-n-butyl, 2-n-butyl, isobutyl, tert-butyl, n-pentyl, isopentyl, neopentyl, and tert-pentyl radicals; hexyl radicals such as the n-hexyl radical; heptyl radicals such as the n-heptyl radical; octyl radicals such as the n-octyl radical and isooctyl radicals such as the 2,2,4-trimethylpentyl radical; nonyl radicals such as the n-nonyl radical; decyl radicals such as the n-decyl radical; dodecyl radicals such as the n-dodecyl radical; octadecyl radicals such as the n-octadecyl radical; cycloalkyl radicals, such as the cyclopentyl, cyclohexyl, cycloheptyl radical and methylcyclohexyl radicals; aryl radicals such as the phenyl, naphthyl, anthryl, and phenanthryl radicals; alkaryl radicals such as o-, m-, and p-tolyl radicals, xylyl radicals and ethylphenyl radicals; and aralkyl radicals such as the benzyl radical and the a- and the (3-phenylethyl radicals.

Examples of substituted radicals R are methoxy-ethyl, ethoxyethyl, and ethoxyethoxyethyl radicals or poly-oxyalkyl radicals such as polyethylene glycol or polypropylene glycol radicals.

Radical R preferably comprises monovalent hydrocarbyl radicals having 1 to 18 carbon atoms that are free from aliphatic carbon-carbon multiple bonds and that are optionally substituted by halogen atoms, amino groups, ether groups, ester groups, epoxy groups, mercapto groups, cyano groups or (poly)glycol radicals, and more preferably comprises monovalent hydrocarbyl radicals having 1 to 12 carbon atoms that are free from aliphatic carbon-carbon multiple bonds, and most preferably the methyl radical.

Examples of radicals R¹ are alkenyl radicals such as linear or branched 1-alkenyl radicals such as the vinyl radical and 1-propenyl radical and also the 2-propenyl radical.

Radical R¹ preferably comprises monovalent hydrocarbyl radicals having 1 to 18 carbon atoms that have aliphatic carbon-carbon multiple bonds and that are optionally substituted by halogen atoms, amino groups, ether groups, ester groups, epoxy groups, mercapto groups, cyano groups or (poly)glycol radicals, and more preferably comprises monovalent hydrocarbyl radicals having 1 to 12 carbon atoms and having aliphatic carbon-carbon multiple bonds, and more particularly the vinyl radical.

Examples of radicals R² are the monovalent radicals stated for R and R¹.

Radical R² preferably comprises monovalent, optionally substituted hydrocarbyl radicals having 1 to 12 carbon atoms that may be interrupted by oxygen atoms, and more preferably comprises alkyl radicals having 1 to 6 carbon atoms, and most preferably the methyl or ethyl radical, and especially the methyl radical. According to another particularly preferred embodiment of the present invention, R² is a lactato group.

Organopolysiloxanes (A) used in accordance with the invention are preferably composed of units of the formula (I) with at least one unit in which b and c are other than 0.

Organopolysiloxanes (A) used in accordance with the invention are preferably substantially linear, organyloxy-terminated organopolysiloxanes, more preferably those of the formula (V)

(OR²)_{3-*f*}R¹*_{f}*Si-(SiR₂-O)*_{g}-*SiR¹*_{f}*(OR²)_{3-*f*} (V),

where
R, R¹, and R² may each be identical or different, and have one of the definitions stated above,
g is 30 to 5000, and
f is 0, 1 or 2, preferably 1,
with the proviso that in formula (V) f is other than 0 in at least one unit.

Although not specified in formula (V), the organopolysiloxanes (A) of the formula (V) that are used in accordance with the invention may contain, resulting from their preparation, a small proportion of branching, preferably up to a maximum of 500 ppm of all the Si units, and most preferably no branching.

Although not specified in the formulae (I) and (V), the organopolysiloxanes (A) used in accordance with the invention may contain, resulting from their preparation, a small proportion of hydroxyl groups, preferably up to a maximum of 5% of all Si-bonded radicals.

Preferred examples of organopolysiloxanes (A) are (MeO)2MeSiO[SiMe₂O]₂₀₀₋₂₀₀₀SiMe(OMe)₂, (MeO)₂MeSiO[SiMe₂O]₂₀₀₋₂₀₀₀SiVi(OMe)₂, (MeO)₂ViSiO[SiMe₂O]₂₀₀₋₂₀₀₀SiVi(OMe)₂, (MeO)₂MeSiO[SiMe₂O]₂₀₀₋₂₀₀₀SiViMe(OMe), (MeO)ViMeSiO[SiMe₂O]₂₀₀₋₂₀₀₀SiViMe(OMe) or (MeO)ViMeSiO[SiMe₂O]₂₀₀₋₂₀₀₀SiVi(OMe)₂, where (MeO)₂MeSiO[SiMe₂O]₂₀₀₋₂₀₀₀SiVi(OMe)₂ or (MeO)₂ViSiO[SiMe₂O]₂₀₀₋₂₀₀₀SiVi(OMe)₂ are more preferred, most preferably (MeO)₂ViSiO[SiMe₂O]200-2000SiVi(OMe)₂, wherein Me is Methyl and Vi is vinyl.

The organopolysiloxanes (A) used in accordance with the invention preferably have a viscosity of 1000 to 10⁶ mPas, more preferably 1000 to 10³ mPas, especially 1000 to 50 000 mPas, in each case at 25° C.

The organopolysiloxanes (A) are commercially customary products and/or can be prepared and isolated by methods commonplace within silicon chemistry, prior to blending.

Examples of radicals R³ are the monovalent radicals stated for R and R¹.

Radical R³ preferably comprises monovalent aliphatic hydrocarbyl radicals having 1 to 7 carbon atoms that are optionally substituted by ether groups, ester groups, (poly)glycol radicals or triorganyloxysilyl groups or aromatic hydrocarbyl radicals optionally substituted by ether groups, ester groups, (poly)glycol radicals or triorganyloxysilyl groups, and more preferably comprises alkyl radicals having 1 to 7 carbon atoms or alkenyl radicals having 1 to 7 carbon atoms or aromatic hydrocarbyl radicals, and most preferably comprises the methyl radical and the vinyl radical.

Examples of radicals R⁴ are hydrogen and the monovalent radicals stated for R and R¹.

Radical R⁴ preferably comprises monovalent, optionally substituted hydrocarbyl radicals having 1 to 12 carbon atoms, that may be interrupted by oxygen atoms, and more preferably comprises alkyl radicals having 1 to 6 carbon atoms, most preferably the methyl or ethyl radical, and especially the ethyl radical. According to another particularly preferred embodiment of the present invention, R⁴ is a lactato group.

The organosilicon compounds (B) used in the compositions of the invention are preferably silanes having at least one methoxy or ethoxy radical and/or their partial hydrolysates, more preferably tetraethoxysilane, methyltrimethoxysilane, methyltriethoxysilane, vinyltrimethoxysilane, vinyltriethoxysilane, vinylmethyldimethoxysilane, vinylmethyldiethoxysilane, phenyltrimethoxysilane, phenyltriethoxysilane or 1,2-bis(triethoxysilyl)ethane and/or their partial hydrolysates, yet more preferably tetraethoxysilane, methyltrimethoxysilane, vinyltrimethoxysilane or vinyltriethoxysilane and/or their partial hydrolysates, still more preferably methyltrimethoxysilane, vinyltrimethoxysilane or vinyltriethoxysilane and/or their partial hydrolysates, and especially vinyltriethoxysilane and/or its partial hydrolysates.

The partial hydrolysates (B) may be partial homo-hydrolysates, i.e., partial hydrolysates of one kind of organo-silicon compound of the formula (II), and also partial cohydrolysates, i.e., partial hydrolysates of at least two different kinds of organosilicon compounds of the formula (II).

Where the compounds (B) used in the compositions of the invention are partial hydrolysates of organosilicon compounds of the formula (II), those having up to ten silicon atoms are preferred.

The crosslinkers (B) used optionally in the compositions of the invention are commercially customary products and/or can be prepared by methods that are known within silicon chemistry.

The compositions of the invention preferably comprise component (B) in amounts of 0.5 to 15.0 parts by weight, more preferably 0.5 to 10.0 parts by weight, most preferably 1.0 to 5.0 parts by weight, based in each case on 100 parts by weight of organopolysiloxanes (A).

Examples of radicals R⁵ are radicals of the formulae H₂NCH₂-, H₂N(CH₂)₂-, H₂N(CH₂)₃-, H₂N(CH₂)₂NH(CH₂)₂-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, H₃CNH(CH₂)₂-, C₂H₅NH(CH₂)₂-, H₂N(CH₂)₄-, H₂N(CH₂)₅-, H(NHCH₂CH₂)₃-, C₄H₉NH(CH₂)₂NH(CH₂)₂-, cyclo-C₆H₁₁NH(CH₂)₃-, cyclo-C₆H₁₁NH(CH₂)₂-, (CH₃)₂N(CH₂)₃-, (CH₃)₂N(CH₂)₂-, (C₂H₅)₂N(CH₂)₃- and (C₂H₅)₂N(CH₂)₂-.

Radical R⁵ preferably comprises H₂N(CH₂)₃-, H₂N(CH₂)₂NH(CH₂)₃-, H₃CNH(CH₂)₃-, C₂H₅NH(CH₂)₃- or cyclo-C₆H₁₁NH(CH₂)₃- radical, most preferably the H₂N(CH₂)₂NH(CH₂)₃-radical.

Examples of radical R⁶ are hydrogen and also the examples stated for radical R².

Radical R⁶ preferably comprises monovalent, optionally substituted hydrocarbyl radicals having 1 to 12 carbon atoms, that may be interrupted by oxygen atoms, and more preferably comprises alkyl radicals having 1 to 6 carbon atoms, and most preferably the methyl or ethyl radical. According to another particularly preferred embodiment of the present invention, R⁶ is a lactato group.

The organosilicon compounds (C) are preferably 3-aminopropyltrimethoxysilane, 3-aminopropyltriethoxysilane, 3-aminopropylmethyldimethoxysilane, 3-aminopropylmethyldiethoxysilane, N-(2-aminoethyl)-3-aminopropyltrimethoxysilane, N-(2-aminoethyl)-3-aminopropyltriethoxysilane, N-(2-aminoethyl)-3-aminopropylmethyldimethoxysilane, N-phenyl-3-aminopropyltrimethoxysilane, N-phenyl-3-aminopropylmethyldimethoxysilane, N-phenyl-3-aminopropyltriethoxysilane or N-phenyl-3-aminopropylmethyldiethoxysilane, or further N-alkyl or N,N-dialkyl derivatives of 3-aminopropyltrimethoxysilane, 3-aminopropyltriethoxysilane, 3-aminopropylmethyldimethoxysilane or 3-aminopropylmethyldiethoxysilane or their partial hydrolysates, where the stated N-alkyl radicals are preferably methyl, ethyl, n-propyl, isopropyl, n-butyl, isobutyl, tert-butyl, cyclohexyl or the various branched or unbranched pentyl or hexyl radicals.

The compounds (C) are more preferably 3-amino-propyltrimethoxysilane, 3-aminopropyltriethoxysilane, N-(2-aminoethyl)-3-aminopropyltrimethoxysilane or N-(2-aminoethyl)-3-aminopropyltriethoxysilane, most preferably N-(2-aminoethyl)-3-aminopropyltrimethoxysilane or N-(2-aminoethyl)-3-aminopropyltriethoxysilane.

The compounds (C) used in the compositions of the invention are commercially customary products and/or can be prepared by methods that are known within silicon chemistry.

The compositions of the invention preferably comprise component (C) in amounts of 0.5 to 15.0 parts by weight, more preferably 0.5 to 10.0 parts by weight, most preferably 0.5 to 5.0 parts by weight, based in each case on 100 parts by weight of organopolysiloxanes (A).

In the compositions of the invention, the weight ratio of component (B) to component (C) is preferably in the range from 2:1 to 1:2, more preferably in the range from 3:2 to 2:3.

Examples of radicals R⁷ are the monovalent aliphatic radicals specified for Rand R¹ with at least 8 carbon atoms.

Radical R⁷ preferably comprises monovalent aliphatic hydrocarbyl radicals optionally substituted by ether groups, ester groups, (poly)glycol radicals or triorganyloxysilyl groups and having at least 8 carbon atoms, and more preferably comprises monovalent aliphatic hydrocarbyl radicals optionally substituted by ether groups, ester groups (poly)glycol radicals or triorganyloxysilyl groups and having 8 to 18 carbon atoms, and yet more preferably comprises aliphatic hydrocarbyl radicals having 8 to 16 carbon atoms, and especially comprises alkyl radicals having 8 to 16 carbon atoms.

Examples of radicals R⁸ are hydrogen and the monovalent radicals stated for R and R¹.

Radical R⁸ preferably comprises monovalent, optionally substituted hydrocarbyl radicals having 1 to 12 carbon atoms, that may be interrupted by oxygen atoms, and more preferably comprises alkyl radicals having 1 to 6 carbon atoms, most preferably the methyl or ethyl radical, and especially the ethyl radical. According to another particularly preferred embodiment of the present invention, R⁸ is a lactato group.

Optional organosilicon compound (D) preferably has at least one radical R⁸ having at least two carbon atoms.

The optional organosilicon compounds (D) used in the compositions of the invention are preferably hexadecyltrimethoxysilane, hexadecyl-triethoxysilane, n-octyltrimethoxysilane, n-octyltriethoxy-silane, isooctyltrimethoxysilane or isooctyltriethoxysilane and/or their partial hydrolysates, more preferably n-octyl-triethoxysilane or isooctyltriethoxysilane.

The partial hydrolysates (D) may be partial homohydrolysates, i.e., partial hydrolysates of one kind of organo-silicon compound of the formula (IV), and also partial cohydrolysates, i.e., partial hydrolysates of at least two different kinds of organosilicon compounds of the formula (IV).

Where the compounds (D) used in the compositions of the invention are partial hydrolysates of organosilicon compounds of the formula (IV), those having up to ten silicon atoms are preferred.

The compounds (D) optionally used in the compositions of the invention are commercially customary products and/or can be prepared by methods that are known within silicon chemistry.

The compositions of the invention preferably comprise component (D) in amounts of 5 to 100 parts by weight, more preferably 10 to 80 parts by weight, most preferably 20 to 50 parts by weight, based in each case on 100 parts by weight of organopolysiloxanes (A).

In addition to the components (A), (B), (C) and optional (D), the compositions of the invention may also comprise all further substances which have also been employed to date in compositions which can be crosslinked by condensation reaction; examples of such further substances include (E) fillers, (F) catalysts, (G) stabilizers, (H) additives and (J) plasticizers.

Examples of fillers (E) are nonreinforcing fillers, these being fillers having a BET surface area of up to 50 m²/g, such as uncoated calcium carbonates, quartz, diatomaceous earth, calcium silicate, zirconium silicate, zeolites, metal oxide powders such as aluminum, titanium, zinc oxides and/or their mixed oxides, barium sulfate, gypsum, silicon nitride, silicon carbide, boron nitride, or glass powders and polymeric powders such as polyacrylonitrile powders. Examples of reinforcing fillers, these being fillers having a BET surface area of more than 50 m²/g, are mixed silicon-aluminum oxides of high BET surface area. It is also possible, furthermore, to use fibrous fillers such as asbestos, or polymeric fibers. The stated fillers may have been hydrophobized, by treatment, for example, with organosilanes and/or organosiloxanes, stearic acid derivative, or by etherification of hydroxyl groups to alkoxy groups.

If fillers (E) are used, they are preferably treated calcium carbonates and preferably provide a thixotropic effect to produce a non-sagging formulation.

This may, for example, mean that when subjected to shear forces the ratio of the viscosity of the composition at a shear rate of 1/s to the viscosity at a shear rate of 5/s at 25°C is at least 2.0, preferably 2.5 or more, more preferably 3.0 or more. In various embodiments, the compositions of the invention show shear-thinning/thixotropic behaviour when subjected to shear forces such that the ratio of the viscosity of the composition at a shear rate of 1 /s to the viscosity at a shear rate of 10/s at 25°C is at least 2, preferably 4.0 or more, more preferably 5.0 or more. In various embodiments, the compositions of the invention show shear-thinning/thixotropic behaviour when subjected to shear forces such that the ratio of the viscosity of the composition at a shear rate of 1/s to the viscosity at a shear rate of 40/s at 25°C is at least 5.0, preferably 7.0 or more, more preferably 10.0 or more. Viscosities as described herein if not explicitly indicated otherwise, are determined using MCR302 rheometer from Anton-Paar GmbH using the method as set forth in BS EN ISO 3219:1995. Specifically, the measuring conditions are as follows: Geometry: 25mm plate/plate geometry; Gap: 0,25mm, F=0N, under nitrogen, 25°C, Shear rate 0.3-40s-1. For extrapolation Casson's model was used.

While there is principally no upper limit, it may be preferred that the shear-thinning/thixotropic properties are not such that the ratio of the viscosity of the composition at a shear rate of 1/s to the viscosity at a shear rate of 10/s at 25°C exceeds 100, preferably not exceeds 50, more preferably not exceeds 30.

In addition, the viscosity of the composition at a shear rate of 10 1/s at 25°C is preferably >10 Pa*s, more preferably >25 Pa*s, most preferably > 50 Pa*s 10 1/s.

The non-sag properties are preferably determined according to ASTM D-2202, especially by using a Frazier (Boeing) Flow Test Jig, i.e., Boeing Slump Gage or Jig, where 0.0 = no slump, 0.254 = slump of 0.254 cm (0.1 = slump of 0.1 inch), demonstrating a non-sag value of about 0.0-0.254 B/S. Preferably a non-sag value of between about 0.0-0.254 B/S is observed when tested according to ASTM D-2202.

If the compositions of the invention do include fillers (E), the amounts are preferably 10 to 500 parts by weight, more preferably 10 to 200 parts by weight, most preferably 50 to 200 parts by weight, based in each case on 100 parts by weight of organopolysiloxane (A).

As catalyst (F) it is possible to use all curing accelerators which have also been employed to date in compositions which can be crosslinked by condensation reaction. Examples of optionally employed catalysts (F) are organotin compounds such as di-n-butyltin dilaurate and di-n-butyltin diacetate, di-n-butyltin oxide, dioctyltin diacetate, dioctyltin dilaurate, dioctyltin oxide, and also reaction products of these compounds with alkoxysilanes, and organo-functional alkoxysilanes such as tetraethoxysilane and aminopropyltriethoxysilane; preferred are di-n-butyltin dilaurate, dioctyltin dilaurate, reaction products of dibutyltin oxide and dioctyltin oxide with tetraethyl silicate hydrolysate or mixed hydrolysates with aminopropylsilanes, especially di-n-butyltin oxide in tetraethyl silicate hydrolysate.

If the compositions of the invention do include catalysts (F), which is preferred, the amounts are preferably 0.01 to 3 parts by weight, more preferably 0.05 to 2 parts by weight, based in each case on 100 parts by weight of organopolysiloxane (A).

If the compositions of the invention do include stabilizers (G), which is preferred, the amounts are preferably 0.01 to 100 parts by weight, more preferably 0.1 to 30 parts by weight, more particularly 0.3 to 10 parts by weight, based in each case on 100 parts by weight of organopolysiloxane (A).

Examples of additives (H) are odorants, oxidation inhibitors, agents for influencing the electrical properties, flame retardants, light stabilizers, fungicides, heat stabilizers, scavengers, such as Si-N-containing silazanes or silylamides, cocatalysts, thixotropic agents, such as, for example, polyethylene glycols, polypropylene glycols or copolymers thereof, organic solvents, such as alkyl aromatics, paraffin oils, and also any desired siloxanes different from component (A).

With preference no organic solvents (H) are used for producing the compositions of the invention.

If the compositions of the invention do include additives (H), the amounts are preferably 0.01 to 100 parts by weight, more preferably 0.1 to 30 parts by weight, most preferably 0.3 to 10 parts by weight, based in each case on 100 parts by weight of organopolysiloxane (A).

Examples of optionally employed plasticizers (J) are dimethylpolysiloxanes which are liquid at room temperature under a pressure of 1013 hPa and are terminated with trimethylsiloxy groups, in particular having viscosities at 25° C. in the range between 20 and 5000 mPas; organopolysiloxanes which are liquid at room temperature under a pressure of 1013 hPa and consist substantially of SiO_{3/2}, SiO_{2/2}, and SiO_{1/2} units, referred to as T, D, and M units; and also high-boiling hydrocarbons, such as, for example, paraffin oils or mineral oils consisting substantially of naphthenic and paraffinic units.

The optionally employed plasticizer (J) preferably comprises linear polydimethylsiloxanes having trimethylsilyl end groups.

If the compositions of the invention do include plasticizers (J), the amounts are preferably 10 to 300 parts by weight, more preferably 10 to 1500 parts by weight, most preferably 10 to 50 parts by weight, based in each case on 100 parts by weight of organopolysiloxane (A). Preferably, the compositions of the invention do not include any plasticizers (J).

The compositions of the invention are preferably compositions comprising
(A) organopolysiloxanes composed of units of the formula (I),
(B) organosilicon compounds of the formula (II) having at least one methyl or ethyl radical R⁴ and/or their partial hydrolysates,
(C) organosilicon compounds containing basic nitrogen and of the formula (III) and/or their partial hydrolysates,
optionally (D) organosilicon compounds of the formula (IV) having at least one ethyl radical R⁸ and/or their partial hydrolysates,
optionally (E) fillers,
optionally (F) catalysts,
optionally (G) stabilizers,
optionally (H) additives and
optionally (J) plasticizers.

The compositions of the invention are more preferably compositions comprising
(A) organopolysiloxanes composed of units of the formula (I) with at least one unit in which b and c are other than 0,
(B) organosilicon compounds of the formula (II) having at least one methyl or ethyl radical R⁴ and/or their partial hydrolysates,
(C) organosilicon compounds containing basic nitrogen and of the formula (III) and/or their partial hydrolysates,
optionally (D) organosilicon compounds of the formula (IV) having at least one ethyl radical R⁸ and/or their partial hydrolysates,
optionally (E) fillers,
optionally (F) catalysts,
optionally (G) stabilizers,
optionally (H) additives and
optionally (J) plasticizers.

The compositions of the invention are yet more preferably compositions comprising
(A) organopolysiloxanes of the formula (V) where R¹ is vinyl radical,
(B) organosilicon compounds of the formula (II) having at least one methyl or ethyl radical R⁴ and/or their partial hydrolysates,
(C) organosilicon compounds containing basic nitrogen and of the formula (III) selected from N-(2-aminoethyl)-3-aminopropyltrimethoxysilane and N-(2-aminoethyl)-3-aminopropyltriethoxysilane, and their partial hydrolysates,
optionally (D) organosilicon compounds of the formula (IV) having an alkyl radical R⁷ having 8 to 16 carbon atoms and at least one ethyl radical R⁸ and/or their partial hydrolysates,
optionally (E) fillers,
optionally (F) catalysts,
(G) stabilizers,
optionally (H) additives and
(J) plasticizers,
with the proviso that the weight ratio of component (B) to component (C) is preferably in the range from 2:1 to 1:2.

The compositions of the invention are still more preferably compositions comprising
(A) organopolysiloxanes selected from the compounds (MeO)₂MeSiO[SiMe₂O]₂₀₀₋₂₀₀₀SiVi(OMe)₂, (MeO)₂ViSiO[SiMe₂O]₂₀₀₋₂₀₀₀SiVi(OMe)₂, (MeO)₂MeSiO[SiMe₂O]₂₀₀₋₂₀₀₀SiViMe(OMe), (MeO)ViMeSiO[SiMe₂O]₂₀₀₋₂₀₀₀SiViMe(OMe) and (MeO)ViMeSiO[SiMe₂O]₂₀₀₋₂₀₀₀SiVi(OMe)₂,
(B) organosilicon compounds selected from the compounds tetraethoxysilane, methyltrimethoxysilane, methyltriethoxysilane, vinyltrimethoxysilane, vinyltriethoxysilane, vinylmethyldimethoxysilane, vinylmethyldiethoxysilane, phenyltrimethoxysilane, phenyltriethoxysilane and 1,2-bis (triethoxysilyl)ethane or their partial hydrolysates,
(C) organosilicon compounds containing basic nitrogen and selected from N-(2-aminoethyl)-3-aminopropyltrimethoxysilane and N-(2-aminoethyl)-3-aminopropyltriethoxysilane, and their partial hydrolysates,
optionally (D) organosilicon compounds of the formula (IV) having an alkyl radical R⁷ having 8 to 16 carbon atoms and an ethyl radical R⁸ and/or their partial hydrolysates,
optionally (E) fillers,
(F) catalysts,
(G) stabilizers,
optionally (H) additives and
(J) plasticizers,
with the proviso that the weight ratio of component (B) to component (C) is preferably in the range from 2:1 to 1:2.

In a further, more particularly preferred embodiment, the compositions of the invention are compositions comprising
(A) organopolysiloxanes selected from the compounds (MeO)₂MeSiO[SiMe₂O]₂₀₀₋₂₀₀₀SiVi(OMe)₂ and (MeO)₂ViSiO[SiMe₂O]₂₀₀₋₂₀₀₀SiVi(OMe)₂,
(B) organosilicon compounds selected from the compounds tetraethoxysilane, methyltrimethoxysilane, vinyltrimethoxysilane and vinyltriethoxysilane, and also their partial hydrolysates,
(C) organosilicon compounds containing basic nitrogen and selected from N-(2-aminoethyl)-3-aminopropyltrimethoxysilane and N-(2-aminoethyl)-3-aminopropyltriethoxysilane, and their partial hydrolysates,
optionally (D) organosilicon compounds of the formula (IV) having an alkyl radical R⁷ having 8 to 16 carbon atoms and an ethyl radical R⁸ and/or their partial hydrolysates,
optionally (E) fillers,
(F) catalysts,
(G) stabilizers,
optionally (H) additives and
(J) plasticizers,
with the proviso that the weight ratio of component (B) to component (C) is preferably in the range from 2:1 to 1:2.

In another very particularly preferred embodiment, the compositions of the invention are compositions comprising
(A) (MeO)₂ViSiO[SiMe₂O]₂₀₀₋₂₀₀₀SiVi(OMe)₂,
(B) vinyltrimethoxysilane and/or its partial hydrolysates,
(C) organosilicon compounds containing basic nitrogen and selected from N-(2-aminoethyl)-3-aminopropyltrimethox-ysilane and N-(2-aminoethyl)-3-aminopropyltriethoxysilane, and their partial hydrolysates,
optionally (D) organosilicon compounds of the formula (IV) having an n-octyl or isooctyl radical R⁷ and an ethyl radical R⁸, and/or their partial hydrolysates,
optionally (E) fillers,
(F) catalysts,
(G) stabilizers,
optionally (H) additives and
(J) plasticizers,
with the proviso that the weight ratio of component (B) to component (C) is preferably in the range from 3:2 to 2:3.

The compositions of the invention preferably contain no further constituents beyond the components (A) to (J).

Especially, the composition of the present invention and in particular the curable organopolysiloxanes of the present invention preferably do not comprise any oximo-groups and do not release oxime during curing. Preferably, it is non-sagging and thixotropic.

The curable composition of the present invention comprises a first pigment (II), preferably titanium oxide, iron oxide, chrome yellow (lead(II) chromate (PbCrO₄)), more preferably iron oxide, most preferably diiron trioxide.

According to a preferred embodiment of the claimed invention, the curable composition comprises a second pigment (III) being different from the first pigment, preferably carbon black, especially furnace black and acetylene black. Other preferred pigments are aluminum oxide and aluminum hydroxide, magnesium hydroxide and magnesium oxide, zinc oxide, organic and inorganic dyes like ultramarine blue.

According to a preferred embodiment of the claimed invention, the curable composition comprises surface treated silica (IV). The silica preferably has a BET surface area of 10 to 250 m²/g. When it is used, it can cause additional increase in the viscosity of the composition of the invention to achieve a non-sagging, thixotropic formulation and it can contribute to strengthening the cured composition.

It is likewise conceivable to use silica with a BET surface area, advantageously with 100 to 250 m²/g, particularly 110 to 170 m²/g, as a filler. Because of the higher BET surface area, the same effect, e.g., strengthening of the cured preparation, can be achieved at a smaller weight proportion of silicic acid. Further substances can thus be used to improve the composition described herein in terms of other requirements.

According to a preferred embodiment of the claimed invention, the curable composition of the present invention comprises surface treated calcium carbonate (V). Preferred surface treated calcium carbonate particles comprise a treatment layer on the surface of the calcium carbonate particles comprising
i. at least one aliphatic aldehyde and/or salty reaction products thereof, and/or
ii. at least one mono-substituted succinic anhydride consisting of succinic anhydride mono-substituted with a group selected from a linear, branched, aliphatic and cyclic group having a total amount of carbon atoms from at least C2 to C30 in the substituent and/or salty reaction products thereof, and/or
iii. at least one polydialkylsiloxane, and/or
iv. at least one alkylksilane, and/or
v. mixtures of the materials according to i. to iv.

Particularly preferred surface treated calcium carbonate particles comprise a hydrophobic coating and are preferably coated with alkylsilane with comprising 4 to 22 carbon atoms e.g. Hexadecyltrimethoxysilane, Hexadecyltriethoxysilane, Octyltriethoxysilane, Octyltrimethoxysilane and others or aliphatic carboxylic acid or a salt thereof. Saturated or unsaturated carboxylic acids comprising 4 to 22 carbon atoms, preferably comprising 6 to 16 carbon atoms, more preferably comprising 10 to 12 carbon atoms are also particularly preferred for said coating, wherein saturated carboxylic acids are most preferred. In that context, use of lauric acid and of stearic acid, especially of stearic acid is particularly favored.

According to a preferred embodiment of the claimed invention, the curable composition of the present invention comprises at least one curing catalyst, preferably selected from tin catalysts, titanium catalysts, aluminum catalysts, or zirconium catalysts, more preferably tin catalysts or titanium catalysts, or mixtures thereof.

In various embodiments, the curing catalyst may be a tin compound, preferably an organotin compound or an inorganic tin salt. Tin in these tin compounds is preferably bivalent or tetravalent. The curing catalyst can be added to the composition particularly as a crosslinking catalyst. Suitable inorganic tin salts are, for example, tin(II) chloride and tin(IV) chloride. Organotin compounds (tin organyles) are used preferably as the tin compounds, however. Suitable organotin compounds are, for example, the 1,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate or tin(II) phenolate.

Suitable furthermore are tin compounds of ethyl silicate, dimethyl maleate, diethyl maleate, dioctyl maleate, dimethyl phthalate, diethyl phthalate, dioctyl phthalate, nonadecylic acid, myristic acid, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, (n-butyl)₂Sn(SCH₂COO), (n-octyl)₂Sn(SCH₂COO), (n-octyl)₂Sn(SCH₂CH₂COO), (n-octyl)₂Sn(SCH₂CH₂COOCH₂CH₂OCOCH₂S), (n-butyl)₂-Sn(SCH₂COO-i-C₈H₁₇)₂, (n-octyl)₂Sn(SCH₂COO-i-C₈H₁₇)₂, and (n-octyl)₂Sn(SCH₂COO-n-C₈H₁₇)₂.

Preferably, the tin compound is selected from 1 ,3-dicarbonyl compounds of bivalent or tetravalent tin, the dialkyltin(IV) dicarboxylates, the dialkyltin(IV) dialkoxylates, the dialkyltin(IV) oxides, the tin(II) carboxylates, and mixtures thereof.

Particularly preferably, the tin compound is a dialkyltin(IV) oxide (e. g. di-n-octyltin oxide) or dialkyltin(IV) dicarboxylate, particularly di-n-butyltin dilaurate, di-n-butyltin diacetate, or di-n-octyltin dilaurate.

Additionally or alternatively, other metal-based condensation catalysts may be used, including, without limitation, compounds of titanium such as organotitanates or chelate complexes, cerium compounds, zirconium compounds, molybdenum compounds, manganese compounds, copper compounds, aluminum compounds, or zinc compounds or their salts, alkoxylates, chelate complexes, or catalytically active compounds of the main groups or salts of bismuth, lithium, strontium, or boron.

Further suitable (tin-free) curing catalysts are, for example, organometallic compounds of iron, particularly the 1 ,3-dicarbonyl compounds of iron such as, e.g., iron(III) acetylacetonate.

Boron halides such as boron trifluoride, boron trichloride, boron tribromide, boron triiodide, or mixtures of boron halides can also be used as curing catalysts. Particularly preferred are boron trifluoride complexes such as, e.g., boron trifluoride diethyl etherate, which as liquids are easier to handle than gaseous boron halides.

Further, amines, nitrogen heterocycles, and guanidine derivatives are suitable in general for catalysis. An especially suitable catalyst from this group is 1 ,8-diazabicyclo[5.4.0]undec-7-ene (DBU).

Titanium, aluminum, and zirconium compounds, or mixtures of one or more catalysts from one or more of the just mentioned groups may also be used as catalysts.

Suitable as titanium catalysts are compounds that have hydroxy groups and/or substituted or unsubstituted alkoxy groups, therefore titanium alkoxides of the general formula

Ti(OR^{z})₄,

wherein R^{z} is an organic group, preferably a substituted or unsubstituted hydrocarbon group having 1 to 20 C atoms, and the 4 alkoxy groups -OR^{z} are identical or different. Further, one or more of the - OR^{z} groups can be replaced by acyloxy groups -OCOR^{z}.

Likewise suitable as titanium catalysts are titanium alkoxides in which one or more alkoxy groups are replaced by a hydroxy group or halogen atoms.

Further, titanium chelate complexes can be used.

Aluminum catalysts can also be used as curing catalysts, e.g., aluminum alkoxides

Al(OR^{z})₃,

wherein R^{z} has the above meaning; i.e., it is an organic group, preferably a substituted or unsubstituted hydrocarbon group having 1 to 20 C atoms and the three R^{z} groups are identical or different. In the case of aluminum alkoxides as well, one or more of the alkoxy groups can be replaced by acyloxy groups - OC(O)R^{z}.

Further, aluminum alkoxides can be used in which one or more alkoxy groups are replaced by a hydroxy group or halogen atoms.

Of the described aluminum catalysts, the pure aluminum alcoholates are preferred in regard to their stability to moisture and the curability of the mixtures to which they are added. In addition, aluminum chelate complexes are preferred.

Suitable as zirconium catalysts are, e.g.: tetramethoxyzirconium or tetraethoxyzirconium.

Diisopropoxyzirconium bis(ethyl acetoacetate), triisopropoxyzirconium (ethyl acetoacetate), and isopropoxyzirconium tris(ethyl acetoacetate) are used with very particular preference.

Further, zirconium acylates, halogenated zirconium catalysts, or zirconium chelate complexes can also be used.

In addition, carboxylic acid salts of metals or also a mixture of a number of such salts can be employed as curing catalysts, whereby these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they exhibit a high activity. Calcium, vanadium, iron, zinc, titanium, and zirconium carboxylates are particularly preferred. Won and titanium carboxylates are very particularly preferred.

The curable composition described herein can contain in addition up to 7wt.-%, preferably 0.2 wt.-% to 3 wt.-%, of conventional adhesion promoters (tackifiers). Suitable as adhesion promoters are, for example, resins, terpene oligomers, coumarone/indene resins, aliphatic petrochemical resins, and modified phenol resins. Suitable within the context of the present invention are, for example, hydrocarbon resins, as can be obtained by polymerization of terpenes, primarily *α*- or*β*-pinene, dipentene, or limonene. These monomers are generally polymerized cationically with initiation using Friedel-Crafts catalysts. The terpene resins also include, for example, copolymers of terpenes and other monomers, for example, styrene, *α*-methylstyrene, isoprene, and the like. The aforesaid resins are used, for example, as adhesion promoters for contact adhesives and coating materials. Also suitable are terpene-phenol resins, which are prepared by the acid-catalyzed addition of phenols to terpenes or rosin. Terpene-phenol resins are soluble in most organic solvents and oils and miscible with other resins, waxes, and natural rubber. Also suitable as an additive in the aforesaid sense within the context of the present invention are the rosin resins and derivatives thereof, for example, the esters thereof.

Also suitable are silane adhesion promoters, particularly alkoxysilanes, with a (further) functional group such as, e.g., an amino group, a mercapto group, an epoxy group, a carboxyl group, a vinyl group, an isocyanate group, an isocyanurate group, or a halogen. Examples are γ-mercaptopropyltrimethoxysilane, γ-mercaptopropyltriethoxysilane, γ-mercaptopropylmethyldimethoxysilane, γ-glycidoxypropyltrimethoxysilane, γ-glycidoxypropyltriethoxysilane, γ-glycidoxypropylmethyldimethoxysilane, β-carboxyethyltriethoxysilane, β-carboxyethylphenylbis-(2-methoxyethoxy)silane, N-β-(carboxymethyl)aminoethyl-γ-aminopropyltrimethoxysilane, vinyltrimethoxysilane, vinyltriethoxysilane, γ-acroyloxypropylmethyltriethoxysilane, γ-isocyanatopropyltrimethoxysilane, γ-isocyanatopropyltriethoxysilane, γ-isocyanatopropylmethyldiethoxysilane, γ-isocyanatopropylmethyldimethoxysilane, tris(trimethoxysilyl)isocyanurate, and γ-chloropropyltrimethoxysilane.

It is furthermore possible to include aminosilanes as adhesion promoters. Said aminosilanes may be selected from 3-aminopropyltrimethoxysilane, 3-aminopropyltriethoxysilane, aminomethyltrimethoxysilane, aminomethyltriethoxysilane, 3-aminopropylmethyldiethoxysilane, (N-2-aminoethyl)-3-aminopropyltrimethoxysilane, (N-2-amino-ethyl)-3-aminopropyltriethoxysilane, diethylenetriaminopropyltrimethoxysilane, phenylamino-methyl-trimethoxy-silane, (N-2-aminoethyl)-3-aminopropylmethyldimethoxysilane, 3-(N-phenylamino)propyl-trimethoxysilane, 3-piperazinylpropylmethyldimethoxysilane, 3-(N,N-dimethylaminopropyl)aminopropylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)-propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)-propyltriethoxysilane, (N,N-diethylamino)methyltrimethoxysilane, (N,N-diethylamino)methyltriethoxysilane, bis(3-trimethoxysilyl)propylamine, bis(3-triethoxysilyl)propylamine, 4-amino-3,3-dimethylbutyltrimethoxy silane, 4-amino-3,3-dimetylbutyltriethoxy silane, N-(n-butyl)-3-aminopropyltrimethoxysilane, and mixtures thereof, particularly preferably of 3-aminopropyltrimethoxysilane, 3-aminopropyltriethoxysilane, aminomethyltrimethoxysilane, aminomethyltriethoxysilane, 3-(N,N-dimethylamino)propyl-trimethoxysilane, 3-(N,N-dimethylamino)propyltriethoxysilane, (N,N-dimethylamino)methyl-trimethoxysilane, (N,N-dimethylamino)methyltriethoxysilane, 3-(N,N-diethylamino)propyltrimethoxysilane, 3-(N,N-diethylamino)-propyltriethoxysilane, (N,N-diethylamino)methyltrimethoxysilane, (N,N-diethylamino)methyl-triethoxysilane, bis(3-trimethoxysilyl)propylamine, and bis(3-triethoxysilyl)propylamine, 4-amino-3,3-dimethylbutyltrimethoxy silane, 4-amino-3,3-dimetylbutyltriethoxy silane, or N-(n-butyl)-3-aminopropyltrimethoxysilane, or oligomers obtained from the condensation of at least one of the above-mentioned aminosilanes, or mixtures thereof. The above-mentioned monomeric aminosilanes or oligomers can be oligomerized together with alkyl-, alkenyl- or aryl-alkoxysilanes, preferably methyltri(m)ethoxysilane, ethyltri(m)ethoxysilane, propyltri(m)ethoxysilane, vinyltri(m)ethoxysilane, n-butyltri(m)ethoxysilane, isobutyltri(m)ethoxysilane, phenyltri(m)ethoxysilane, and/or octyltri(m)ethoxysilane.

In various embodiments, the compositions of the invention further comprise at least one aminosilane as described above, in particular one of the tertiary aminosilanes. *"Tertiary aminosilane",* as used herein, refers to an aminosilane wherein the nitrogen atom of the amino group is covalently linked to three non-hydrogen residues.

The curable composition of the present invention optionally comprises a Cerium (III) additive, the amount of which preferably falls within the range of from 0.01 wt.% to 2.0 wt.%, more preferably within the range of from 0.1 wt.% to 0.5 wt.%, based on the total weight of the curable composition. Particularly suitable Cerium (III) additives include fatty acid salts, especially Cerium(III) 2-ethylhexanoate.

The curable composition can comprise at least one additional auxiliary substance, preferably selected, for example, from the group consisting of plasticizers, extenders, stabilizers, antioxidants, fillers, reactive diluents, drying agents, UV stabilizers, rheological aids, and/or solvents. Of particular importance are typically plasticizers, fillers, and stabilizers, comprising antioxidants and UV stabilizers.

Preferably, the curable compositions therefore contain at least one auxiliary substance.

It is conceivable that the viscosity of the curable composition is too high for certain applications. It can then be reduced in a simple and expedient way usually by using a reactive diluent, without any signs of demixing (e.g., plasticizer migration) occurring in the cured mass.

Solvents and/or plasticizers can be used, in addition to or instead of a reactive diluent, for reducing the viscosity of the curable composition.

Suitable as solvents are aliphatic or aromatic hydrocarbons, halogenated hydrocarbons, ketones, ethers, esters, ester alcohols, keto alcohols, keto ethers, keto esters, and ether esters.

The composition described herein can furthermore contain hydrophilic plasticizers. These are used to improve the moisture absorption and thereby to improve the reactivity at low temperatures. Suitable as plasticizers are, for example, esters of abietic acid, adipic acid esters, azelaic acid esters, benzoic acid esters, butyric acid esters, acetic acid esters, esters of higher fatty acids having approximately 8 to approximately 44 carbon atoms, epoxidized fatty acids, fatty acid esters and fats, glycolic acid esters, phosphoric acid esters, phthalic acid esters, linear or branched alcohols containing 1 to 12 carbon atoms, propionic acid esters, sebacic acid esters, sulfonic acid esters, thiobutyric acid esters, trimellitic acid esters, citric acid esters, and esters based on nitrocellulose and polyvinyl acetate, as well as mixtures of two or more thereof.

For example, of the phthalic acid esters, dioctyl phthalate, dibutyl phthalate, diisoundecyl phthalate, or butylbenzyl phthalate is suitable, and of the adipates, dioctyl adipate, diisodecyl adipate, diisodecyl succinate, dibutyl sebacate, or butyl oleate.

Also suitable as plasticizers are the pure or mixed ethers of monofunctional, linear or branched C4-16 alcohols or mixtures of two or more different ethers of such alcohols, for example, dioctyl ether (obtainable as Cetiol OE, Cognis Deutschland GmbH, Düsseldorf).

Endcapped polyethylene glycols are also suitable as plasticizers, for example, polyethylene or polypropylene glycol di-C1-4-alkyl ethers, particularly the dimethyl or diethyl ethers of diethylene glycol or dipropylene glycol, and mixtures of two or more thereof.

Suitable plasticizers are endcapped polyethylene glycols, such as polyethylene or polypropylene glycol dialkyl ethers, where the alkyl group has up to four C atoms, and particularly the dimethyl and diethyl ethers of diethylene glycol and dipropylene glycol. An acceptable curing is achieved in particular with dimethyldiethylene glycol also under less favorable application conditions (low humidity, low temperature). Reference is made to the relevant technical chemistry literature for further details on plasticizers.

Also suitable as plasticizers are diurethanes, which can be prepared, for example, by reacting diols, having OH end groups, with monofunctional isocyanates, by selecting the stoichiometry such that substantially all free OH groups react. Optionally excess isocyanate can then be removed from the reaction mixture, for example, by distillation. A further method for preparing diurethanes consists of reacting monofunctional alcohols with diisocyanates, whereby all NCO groups are reacted if possible.

In various embodiments, the plasticizer may be a polydimethylsiloxane, particularly a PDMS.

The curable compositions may contain the plasticizer preferably in an amount of 0 to 40% by weight, preferably in an amount of 0 to 30% by weight based in each case on the total weight of the composition.

If a mixture of plasticizers is used, the amounts refer to the total amount of plasticizers in the composition.

The curable composition can further contain at least one stabilizer, selected from antioxidants, UV stabilizers, and drying agents.

All conventional antioxidants may be used as antioxidants. They are preferably present up to about 7% by weight, particularly up to about 5% by weight.

The composition herein can contain UV stabilizers, which are preferably used up to about 2% by weight, preferably about 1% by weight. The so-called hindered amine light stabilizers (HALS) are particularly suitable as UV stabilizers. It is preferred within the context of the present invention if a UV stabilizer is employed, which caries a silyl group and is incorporated into the end product during crosslinking or curing. The products Lowilite 75 and Lowilite 77 (Great Lakes, USA) are particularly suitable for this purpose. Further, benzotriazoles, benzophenones, benzoates, cyanoacrylates, acrylates, sterically hindered phenols, phosphorus, and/or sulfur can also be added.

It is often useful to stabilize the compositions in regard to penetrating moisture by means of drying agents in order to increase the storability (shelf life) still further.

Such an improvement in storability can be achieved, for example, by using drying agents. All compounds that react with water with the formation of a group inert to the reactive groups present in the preparation are suitable as drying agents and thereby undergo the smallest possible changes in their molecular weight. Furthermore, the reactivity of the drying agents to moisture penetrating into the preparation must be higher than the reactivity of the groups of the silyl group-bearing polymer of the invention present in the preparation.

Isocyanates, for example, are suitable as drying agents.

Advantageously, however, silanes are used as drying agents. For example, vinylsilanes such as 3-vinylpropyltriethoxysilane, or benzamidosilanes such as bis(N-methylbenzamido)methylethoxysilane (CAS No. 16230-35-6) or carbamatosilanes such as carbamatomethyltrimethoxysilane. The use of methyl-, ethyl-, or vinyltrimethoxysilane, tetramethyl- or tetraethylethoxysilane is also possible. Vinyltrimethoxysilane and tetraethoxysilane are particularly suitable in terms of cost and efficiency.

Also suitable as drying agents are the aforesaid reactive diluents, provided they have a molecular weight (Mn) of less than about 5000 g/mol.

Lastly, alkyl orthoformates or alkyl orthoacetates can also be used as drying agents, for example, methyl or ethyl orthoformate or methyl or ethyl orthoacetate.

The compositions generally contain about 0 to about 6% by weight of drying agent.

The composition described herein can additionally contain fillers. Suitable here are, for example, chalk, lime powder, zeolites, bentonites, magnesium carbonate, diatomaceous earth, alumina, clay, tallow, zinc oxide, sand, quartz, flint, mica, glass powder, and other ground mineral substances. Organic fillers can also be used, such as, for example, graphite, wood fibers, wood flour, sawdust, cellulose, cotton, pulp, cotton, wood chips, chopped straw, and chaff. Short fibers such as glass fibers, glass filament, polyacrylonitrile, carbon fibers, Kevlar fibers, or polyethylene fibers may also be added. Aluminum powder is also suitable as a filler.

Suitable further as fillers are hollow spheres having a minerai shell or a plastic shell. These can be, for example, hollow glass spheres which are obtainable commercially under the trade names Glass Bubbles^{®}. Plastic-based hollow spheres, e.g., Expancel^{®} or Dualite^{®}, are described, for example, in EP 0 520 426 B1. They are made up of inorganic or organic substances and each have a diameter of 1 mm or less, preferably 500 pm or less.

Fillers that impart thixotropy to the preparations are preferred for many applications. Such fillers are also described as rheological adjuvants, e.g., hydrogenated castor oil, fatty acid amides, silica or swellable plastics such as PVC. In order to be readily squeezable out of a suitable dispensing device (e.g., a tube), such preparations possess a viscosity from 40,000 to 400,000 mPas, preferrably 80,000 to 200,000 mPas.

The fillers are preferably used in an amount of 1 to 80% by weight, particularly preferably 2 to 60% by weight. Of course, mixtures of a number of fillers can also be used. In this case, the quantitative data naturally refer to the total amount of filler in the composition.

In preferred embodiments, the curable composition according to the invention comprises the following components in the stated proportions by weight:
(i) organyloxy group containing organopolysiloxanes (I): from 10 wt.-% to 90 wt.-% by weight, preferably from 20 wt.-% to 40 % by weight, based on the total weight of the composition; and/or
(ii) first pigment (II): from 0.1 wt.-% to 50 wt.-% by weight, preferably from 0.5 wt.-% to 10 wt.-%, based on the total weight of the curable composition; and/or
(iii) second pigment (III): from 0 to about 25 %, preferably 0.5 to 10 %, based on the total weight of the curable composition; and/or
(iv) surface treated silica (IV): from 0 to 15 %, preferably 0.5 to 5 %, based on the total weight of the curable composition; and/or
(v) surface treated calcium carbonate (V): from 0 to 80 %, preferably 20 to 60 % by weight, based on the total weight of the curable composition; and/or,
(vi) Cerium (III) additive: from 0 to 3 % by weight, preferably 0.01 to 2 %, more preferably 0.1 to 0.5 %, based on the total weight of the curable composition; and/or,
(vii) tin catalyst (VII): from 0 to 3 % by weight, preferably less than 0.25 % by, based on the total weight of the curable composition; and/or
(viii) aminosilane: from 0 to 7 % by weight, preferably 0.2 % to 3%, based on the total weight of the curable composition,
wherein the proportions by weight preferably add up to 100 wt.-%.

With regard to the preferred representatives of the individual components and the preferably used quantities thereof, the statements made above in the description of the respective components apply.

The preparation of the curable composition according to the invention can take place by simple mixing of the organyloxy group containing organopolysiloxanes (I) and the first pigment (II) and optionally the second pigment (III), the surface treated silica (IV), the surface treated calcium carbonate (V), the Cerium (VI) additive, the tin catalyst (VII) and/or the aminosilane and optionally the other ingredients described herein. This can take place in suitable dispersing units, e.g., a highspeed mixer. In this case, preferably, care is taken that the mixture does not come into contact with moisture as far as possible, which could lead to an undesirable premature curing. Suitable measures are sufficiently known and comprise, for example, working in an inert atmosphere, possibly under a protective gas, and drying/heating of individual components before they are added.

The invention also relates to an adhesive, sealant, or coating material comprising the curable composition according to the invention.

The invention further relates to the use of the curable composition according to the invention as an adhesive, sealant, or coating material. A further field of application for the compositions is the use as a plugging compound, hole filler, or crack filler. The use as an adhesive and/or sealant is preferred. The compositions are suitable, inter alia, for bonding plastics such as PVC (polyvinyl chloride), ABS (acrylonitrile-butadiene-styrene copolymer), polycarbonate, acrylic materials, in particular PMMA (poly(methyl methacrylate)), metals, glass, ceramic, tile, wood, wood-based materials, paper, paper-based materials, rubber, and textiles, for gluing floors, and for sealing building elements, windows, wall and floor coverings, and joints in general. In this case, the materials can be bonded to themselves or as desired to one another.

Because of the high temperature resistant properties, the curable composition of the present invention is particularly suited for applications demanding high temperature resistant properties, such as household and industrial devices, which are operated at high pressure, high temperatures and in contact with an aggressive environment, such as heat exchangers.

The outstanding high temperature stability achievable by the claimed invention results in excellent retention of mechanical properties, in particular tensile strength and elongation, which after 3000 h at 180°C, is > 75%.

The following examples serve to illustrate the invention, but the invention is not limited thereto.

### Examples

Unless otherwise stated, the examples which follow are carried out at a pressure of the surrounding atmosphere, in other words approximately at 1000 hPa, and at room temperature, in other words at approximately 23° C., and/or at a temperature which comes about when the components are combined at room temperature without additional heating or cooling, and also at a relative atmospheric humidity of approximately 50%. Furthermore, all figures for parts of percentages, unless otherwise stated, are by weight.

The formulations were prepared as described in the Tables below and subjected to curing performance tests as follows:
Tensile strength and elongation: The tensile strength and elongation at break were determined in accordance with DIN 53504. The samples were cured in a mold at room temperature over seven days. The specimen type S2 (Dog bone) was used and the speed of the pull head in the dynamometer was 200mm/min.

Determination of Skin-over time (SOT): Skin-over time (SOT) is defined as the time required for the material to form a non-tacky surface film. The determination of the skin over time is carried out according to DIN 50014 under standard climate conditions (23 +/- 2°C, relative humidity 50 +/- 5%). The temperature of the sealant must be 23 +/- 2°C, with the sealant/adhesive stored for at least 24 h beforehand in the laboratory. The sealant/adhesive is applied to a sheet of paper and spread out with a putty knife to form a skin (thickness about 2 mm, width about 7 cm). The stopwatch is started immediately. At intervals, the surface is touched lightly with the fingertip and the finger is pulled away, with sufficient pressure on the surface that an impression remains on the surface when the skin formation time is reached. The skin-over time is reached when sealing compound no longer adheres to the fingertip. The skin-over time (SOT) is expressed in minutes.

Measurement of Shore A hardness: Shore A hardness was measured according to ISO 868.

Density: The density was determined according to ISO 9073-1 (from 1989).

Determination of the depth of cure (DOC): A strip of the material with a height of 10 mm (+/- 1 mm) and width of 20 mm (+/- 2 mm) was applied over a plastic foil (PP) using a Teflon spatula. After storing the sample for 24 hours at normal conditions (23 +/- 2 °C, relative humidity 50 +/- 5 %), a section of the strip was cut off and the thickness of the cured layer was measured with a caliper. The depth of cure after 24 hours is expressed in millimeters.

Peel test: If possible and needed, substrate (test panel) is cleaned prior to application using a suitable solvent (e.g. isopropanol, acetone). A bead of the material with a height of 10 mm (+/- 1 mm) and width of 20 mm (+/- 2 mm) was applied over the substrate using a Teflon spatula / cartridge and cartridge gun. The sample was stored for 7 days at normal conditions (23 +/- 2 °C, relative humidity 50 +/- 5 %). The cured material was cut back for at least 15mm with a shape blade and the bead pulled by hand. Failure mode was recorded as *"cf* 85", *"cf 90"* and *"cf 100",* wherein *"cf XX"* refers to XX% of wetted surface shows cohesive break.

**Table 1**

| | Example 1 [%] | Example 2 [%] | Example 3 [%] | Example 4 [%] |
|---|---|---|---|---|
| polydimethylsiloxane with dimethoxysilyl-end groups' | 72.500 | 72.500 | 72.500 | 50.360 |
| polydimethylsiloxane with dimethoxysilyl-end groups^{2v} | 8.000 | 8.000 | 8.000 | 5.540 |
| diiron trioxide | 5.200 | 5.200 | 5.200 | 2.000 |
| carbon black | 6.200 | 6.200 | 6.200 | 4.000 |
| surface-treated calcium carbonate | | | | 30.000 |
| surface-treated fumed silica | 3.300 | 3.300 | 3.300 | 3.300 |
| methyl trimethoxy silane | 3.000 | 3.000 | 3.000 | 3.000 |
| 3-aminopropyl trimethoxy silane | 0.500 | | 0.500 | 0.500 |
| N-(beta-aminoethyl)-gamma-aminopropyl trimethoxy silane³ | | 0.500 | | 0.500 |
| aminoalkyl modified oligosiloxane⁴ | 0.500 | 0.500 | 0.500 | |
| Bis(trimethylsilyl) amine | 0.300 | 0.300 | 0.300 | 0.300 |
| cerium tris(2-ethyl hexanoate) 12% | 0.200 | 0.200 | 0.200 | 0.200 |
| dioctyltin dineodecanoate | 0.300 | 0.300 | 0.300 | 0.300 |

| | | | | |
|---|---|---|---|---|
| ¹: Polymer AL 60 commercially available from Wacker Chemie AG, Germany ²: Polymer AL 08 commercially available from Wacker Chemie AG, Germany ³: Silquest A-1120 commercially available from Momentive Performance Materials, Inc., USA ⁴: Dynasylan 1146 commercially available from Evonik Operations GmbH, Germany | | | | |

**Table 2**

| | after curing | | 750h @ 180°C | | 1 ,500h @ 180°C | | 2,250h @ 180°C | | 3000 h @ 180°C | |
|---|---|---|---|---|---|---|---|---|---|---|
| | Tensile Strength [MPa] | Elongation [%] | Tensile Strength [MPa] | Elongation [%] | Tensile Strength [MPa] | Elongation [%] | Tensile Strength [MPa] | Elongation [%] | Tensile Strength [MPa] | Elongation [%] |
| oxime silicone paste⁵ | 1.2 | 220 | 1.75 | 300 | 1.55 | 283 | 1.7 | 280 | 1,5 | 283 |
| Example 1 | 0.9 | 262 | 1.1 | 388 | 0.8 | 355 | 1.0 | 430 | 0.7 | 420 |
| Example 2 | 1.0 | 281 | 1.0 | 406 | 0.9 | 394 | 1.1 | 510 | 0.75 | 514 |
| Example 3 | 0.9 | 266 | 1.0 | 420 | 0.8 | 419 | 1.0 | 480 | 0.8 | 458 |
| Example 4 | 1.7 | 410 | 2.0 | 462 | n.d. | n.d. | n.d. | n.d. | n.d. | n.d. |

| | | | | | | | | | | |
|---|---|---|---|---|---|---|---|---|---|---|
| ⁵: Teroson SI 176 commercially available from Henkel AG & Co. KGaA, Germany | | | | | | | | | | |

**Table 3**

| | | oxime silicone paste⁵ | Example 1 | Example 2 | Example 3 | Example 4 |
|---|---|---|---|---|---|---|
| | unit | | | | | |
| Skin time | [min] | 63 | 120 | 120 | 120 | n.d. |
| Shore A 1d | | n.d. | 23 | 16 | 19 | 23 |
| Shore A 7d | | n.d. | 24 | 26 | 24 | 34 |
| Shore A 14d | | 38 | 27 | 26 | 28 | 38 |
| Density | [g/cm³] | 1,28 | 1,07 | 1,06 | 1,07 | n.d. |
| Cure speed | [mm/24h] | 2,1 | 2,5 | 3 | 2,8 | 2,2 |

**Table 4**

| | oxime silicone paste⁵ | | Example 1 | | Example 2 | | Example 3 | |
|---|---|---|---|---|---|---|---|---|
| substrate | A2/1⁶ | A2/4⁷ | A2/1⁶ | A2/4⁷ | A2/1⁶ | A2/4⁷ | A2/1⁶ | A2/4⁷ |
| glass | cf 85 | cf 100 | cf 100 | cf 100 | cf 100 | cf 100 | cf 100 | cf 100 |
| Anodized aluminum | cf 100 | cf 100 | cf 100 | cf 100 | cf 100 | cf 100 | cf 100 | cf 100 |
| Brass | cf 100 | cf 100 | cf 100 | cf 100 | cf 100 | cf 100 | cf 100 | cf 100 |
| stainless steel | cf 90 | cf 100 | cf 100 | cf 100 | cf 100 | cf 100 | cf 100 | cf 100 |
| glass fibre reinforeced epoxy | cf 100 | cf 100 | cf 100 | cf 100 | cf 100 | cf 100 | cf 100 | cf 100 |
| PA 6.6 | cf 100 | cf 100 | cf 100 | cf 100 | cf 100 | cf 100 | cf 100 | cf 100 |
| Aluminum Magnesium Silicon alloy Al-Mg-Si-1 | cf 85 | cf 100 | cf 100 | cf 100 | cf 100 | cf 100 | cf 100 | cf 100 |

| | | | | | | | | |
|---|---|---|---|---|---|---|---|---|
| ⁶: 1 week ⁷: 4 weeks | | | | | | | | |

## Claims

1. A curable composition comprising,
I. organyloxy group containing organopolysiloxanes comprising
(A) organopolysiloxane(s) containing organyloxy groups and consisting of units of the formula (I)
R*ₐ*R¹*_{b}*(OR²)*_{c}*SiO_{(4-*a*-*b*-*c*)/2} (I),
where
R are identical or different and represent monovalent, SiC-bonded, optionally substituted hydrocarbyl radicals that are free from aliphatic carbon-carbon multiple bonds,
R¹ are identical or different and denote monovalent, SiC-bonded, optionally substituted hydrocarbyl radicals having aliphatic carbon-carbon multiple bonds, R² are identical or different and denote monovalent, optionally substituted hydrocarbyl radicals, optionally interrupted by oxygen atoms,
a is 0, 1, 2 or 3,
b is 0 or 1, and
c is 0, 1, 2 or 3,
with the proviso that in formula (I) the sum a+b+c≤3 and c is other than 0 in at least one unit,
(B) organosilicon compound(s) of the formula (II) (
R⁴O)*_{d}*SiR³_{(4-*d*)}
where
R³ are identical or different and denote monovalent, SiC-bonded, aliphatic hydrocarbyl radicals having 1 to 7 carbon atoms, that are optionally substituted by one or more of ether groups, ester groups, (poly)glycol radicals, triorganyloxysilyl groups, or aromatic radicals,
R⁴ are identical or different and denote hydrogen or monovalent, optionally substituted hydrocarbyl radicals which are optionally interrupted by oxygen atoms, and
d is 2, 3 or 4,
and/or their partial hydrolysates,
(C) organosilicon compound(s) containing basic nitrogen, of the formula (III)
(R⁶O)*ₑ*SiR⁵_{(4-*e*)} (III),
where
R⁵ are identical or different and denote monovalent, SiC-bonded radicals containing basic nitrogen,
R⁶ are identical or different and denote hydrogen or monovalent, optionally substituted hydrocarbyl radicals which are optionally interrupted by oxygen atoms,
e is 2 or 3,
and/or their partial hydrolysates, and
optionally (D) organosilicon compound(s) of the formula (IV)
(R⁸O)*ₕ*SiR⁷_{(4-*h*)} (IV),
where
R⁷ are identical or different and denote monovalent, SiC-bonded, aliphatic hydrocarbyl radicals having at least 8 carbon atoms, optionally substituted by one or more of ether groups, ester groups, (poly)glycol radicals or triorganyloxysilyl groups,
R⁸ are identical or different and denote hydrogen or
monovalent, optionally substituted hydrocarbyl radicals which are optionally interrupted by oxygen atoms,
h is 2 or 3,
and/or their partial hydrolysates,
II. a first pigment,
III. optionally a second pigment,
IV. optionally surface treated silica,
V. optionally surface treated calcium carbonate,
VI. optionally a Cerium (III) additive,
VII. optionally a tin catalyst.

2. The curable composition according to Claim 1, wherein organopolysiloxanes (A) are substantially linear, organyloxyterminated organopolysiloxanes of the formula (V)
(OR²)_{3-*f*}R¹*_{f}*Si-(SiR₂-O)*_{g}*-SiR¹*_{f}*(OR²)_{3-*f*} (V),
where
R, R¹ and R² are each identical or different, and have one of the definitions stated above, g is 30 to 5000, and
f is 0, 1 or 2,
with the proviso that in formula (V) f is other than 0 in at least one unit.

3. The curable composition according to Claim 1 or 2, wherein at least one organopolysiloxane (A) is (MeO)₂MeSiO[SiMe₂O]₂₀₀₋₂₀₀₀SiMe(OMe)₂, (MeO)₂MeSiO[SiMe₂O]₂₀₀₋₂₀₀₀SiVi(OMe)₂, (MeO)₂ViSiO[SiMe₂O]₂₀₀₋₂₀₀₀SiVi(OMe)₂, (MeO)₂MeSiO[SiMe₂O]₂₀₀₋₂₀₀₀SiViMe(OMe), (MeO)ViMeSiO[SiMe₂O]₂₀₀₋₂₀₀₀SiViMe(OMe), or (MeO)ViMeSiO[SiMe₂O]₂₀₀₋₂₀₀₀SiVi(OMe)₂.

4. The curable composition according to any one of Claims 1 to 3, wherein organosilicon compound (D) has at least one radical R⁸ having at least two carbon atoms.

5. The curable composition according to any one of Claims 1 to 4, wherein at least one organosilicon compounds (D) is hexadecyltrimethoxysilane, hexadecyltriethoxysilane, n-octyltrimethoxysilane, n-octyltriethoxysilane, isooctyltrimethoxysilane or isooctyltriethoxysilane and/or their partial hydrolysates.

6. The curable composition according to any one of Claims 1 to 5, wherein the weight ratio of component (B) to component (C) is in the range from 2:1 to 1:2.

7. The curable composition according to any one of Claims 1 to 6, which comprises:
(A) organopolysiloxanes consisting of units of the formula (I),
(B) organosilicon compounds of the formula (II) having at least one methyl or ethyl radical R⁴ and/or their partial hydrolysates,
(C) organosilicon compounds containing basic nitrogen and of the formula (III) and/or their partial hydrolysates,
optionally (D) organosilicon compounds of the formula (IV) having at least one ethyl radical R⁸ and/or their partial hydrolysates,
optionally (E) fillers,
optionally (F) catalysts,
optionally (G) stabilizers,
optionally (H) additives, and
optionally (J) plasticizers.

8. The curable composition according to any one of Claims 1 to 7, which comprises:
(A) organopolysiloxanes of the formula (V) with vinyl radical R¹,
(B) organosilicon compounds of the formula (II) having at least one methyl or ethyl radical R⁴ and/or their partial hydrolysates,
(C) organosilicon compounds containing basic nitrogen and of the formula (III) selected from N-(2-amino-ethyl)-3-aminopropyltrimethoxysilane and N-(2-ami-noethyl)-3-aminopropyltriethoxysilane and their partial hydrolysates,
optionally (D) organosilicon compounds of the formula (IV) having an alkyl radical R⁷ having 8 to 16 carbon atoms and at least one ethyl radical R⁸ and/or their partial hydrolysates,
optionally (E) fillers,
optionally (F) catalysts,
(G) stabilizers,
optionally (H) additives and
(J) plasticizers,
with the proviso that the weight ratio of component (B) to component (C) is in the range from 2:1 to 1:2.

9. The curable composition according to any one of Claims 1 to 8, wherein the first pigment is diiron trioxide.

10. The curable composition according to any one of Claims 1 to 9, wherein the second pigment is carbon black.

11. The curable composition according to any one of Claims 1 to 10 additionally comprising an aminosilane.

12. The curable composition according to any one of Claims 1 to 11, wherein the R², R⁴, R⁶ and/or R⁸ is a lactato group.

13. The curable composition according to any one of claims 1 to 12, wherein
(i) the amount of the organyloxy group containing organopolysiloxanes (I) is from 10 wt.-% to 90 wt.-% by weight, preferably 20 wt.-% to 40 % by weight, based on the total weight of the composition; and/or
(ii) the amount of the first pigment (II) is from 0.1 wt.-% to 50 wt.-% by weight, preferably 0.5 wt.-% to 10 wt.-%, based on the total weight of the curable composition; and/or
(iii) the amount of the second pigment (III) is 0 to about 25 %, preferably 0.5 to 10 %, based on the total weight of the curable composition; and/or
(iv) the amount of the surface treated silica (IV) is 0 to 15 %, preferably 0.5 to 5 %, based on the total weight of the curable composition
(v) the amount of the surface treated calcium carbonate (V) is 0 to 80 %, preferably 20 to 60 % by weight, based on the total weight of the curable composition; and/or,
(vi) the amount of Cerium (VI) additive is 0 to 3 % by weight, preferably 0.05 to 1 %, based on the total weight of the curable composition; and/or,
(vii) the amount of the tin catalyst (VII) is 0 to 3 % by weight, preferably less than 0.25 % by, based on the total weight of the curable composition; and/or
(viii) the amount of the aminosilane is 0 to 7 % by weight, preferably 0.2 % to 3%, based on the total weight of the curable composition.

14. An adhesive, sealant, or coating material comprising the curable composition according to any one of claims 1 to 13.

15. Use of a curable composition according to any one of claims 1 to 13 as an adhesive, sealant, or coating material.
